# EUROPÄISCHE PATENTSCHRIFT

(11) **EP 1 328 338 B1**
(45) Veröffentlichungstag und Bekanntmachung des Hinweises auf die Patenterteilung: **23.08.2006**
(21) Anmeldenummer: 01970077.2
(22) Anmeldetag: 02.10.2001
(51) Int. Cl.: B01F 5/06, B01F 13/00

(54) **STATIKMISCHER UND VERFAHREN ZUM VERMISCHEN EINER HAUPTKOMPONENTE MIT EINER ZUSATZKOMPONENTE**
STATIC MIXER AND METHOD FOR MIXING A MAIN COMPONENT WITH AN ADDITIONAL COMPONENT
MELANGEUR STATIQUE ET PROCEDE DE MELANGE D'UN CONSTITUANT PRINCIPAL ET D'UN ADDITIF

(30) Priorität: 17.10.2000 CH 203700
(43) Veröffentlichungstag der Anmeldung: 23.07.2003
(73) Patentinhaber: Sika Technology AG, 6340 Baar (CH)
(72) Erfinder: KOCH, Reto, CH-8005 Zürich (CH); DOHNER, Reto, CH-8005 Zürich (CH)
(74) Vertreter: Sika Patent Attorneys
(86) Internationale Anmeldenummer: PCT/IB2001/001818
(87) Internationale Veröffentlichungsnummer: WO 2002/032562

(56) Entgegenhaltungen:
- EP-A- 0 337 719
- EP-A- 1 006 057
- WO-A-87/05258
- DE-A- 4 142 576
- SU-A- 1 498 623
- US-A- 4 182 601
- US-A- 4 309 160

## Beschreibung

### TECHNISCHES GEBIET

Die vorliegende Erfindung betrifft einen Statikmischer, die Verwendung des Statikmischers sowie ein Verfahren und die Anwendung des Verfahrens gemäss den Oberbegriffen der unabhängigen Ansprüche.

### STAND DER TECHNIK

Statikmischer kommen im allgemeinen dort zur Anwendung, wo zwei oder mehr Ströme aus fliessfähigen Stoffen zu einem vollständig oder teilweise durchmischten gemeinsamen fliessfähigen Stoffstrom vermischt werden müssen.

Eine solche Anwendung und ein Statikmischer slud aus der EP-A-0 337 719 bekannt.

Aus der klebstoffindustrie ist die verwendung von Statikmischern zum Vermischen von reaktiven Komponenten bekannt, wobei diese sowohl dem im wesentlichen homogenen Vermischen der Komponenten von Mehrkomponentenklebstoffen als auch zum schichtweisen Einmischen von Aushärtebeschleunigern in Einkomponentenklebstoffe dienen. Speziell bei der letztgenannten Verwendung von Statikmischern zum Erzeugen und Applizieren von Klebstoffraupen kommt es häufig zu Fehlklebungen, weil eine oder mehrere der eingemischten Schichten aus typischerweise nicht selbstaushärtendem Aushärtebeschleuniger im Aussenbereich der Klebstoffraupe zu Tage treten und an die zu verklebende Oberfläche angrenzen.

### DARSTELLUNG DER ERFINDUNG

Es stellt sich daher die Aufgabe, Vorrichtungen und Verwendungen der Vorrichtungen sowie Verfahren und Anwendungen der Verfahren zur Verfügung zu stellen, welche die genannten Nachteile des Standes der Technik nicht aufweisen bzw. diese beheben.

Diese Aufgabe wird von den Gegenständen der unabhängigen Ansprüche 1, 21 ,27 und 28 gelöst.

### KURZE BESCHREIBUNG DER ZEICHNUNGEN

Bevorzugte Ausführungen der Erfindung ergeben sich aus den abhängigen Ansprüchen sowie aus der nun folgenden Beschreibung anhand der Figuren. Dabei zeigen:
Fig. 1a einen Längsschnitt durch einen Statikmischer zur Befestigung mit einer Überwurfhülse;
Fig. 1b einen Schnitt durch den Statikmischer aus Fig. 1a entlang der Linie A-A;
Fig. 2a einen Längsschnitt durch einen anderen Statikmischer zur Befestigung mit einer Überwurfhülse;
Fig. 2b einen Schnitt durch den Statikmischer aus Fig. 2a entlang der Linie B-B;
Fig. 2c einen Schnitt durch den Statikmischer aus Fig. 2a entlang der Linie C-C;
Fig. 3a einen Längsschnitt durch einen weiteren Statikmischer zur Befestigung mit einer Überwurfhülse;
Fig. 3b einen Schnitt durch den Statikmischer aus Fig. 3a entlang der Linie D-D;
Fig 4a einem Längsschnitt durch einen Statikmischer nicht gemäß der Erfindung zur Befestigung mit einer Überwurfhülse;
Fig. 4b einen Schnitt durch den Statikmischer aus Fig. 4a entlang der Linie E-E;
Fig. 5a einen Längsschnitt durch einen Statikmischer zum Aufschrauben auf einen Gewindestutzen;
Fig. 5b einen Schnitt durch den Statikmischer aus Fig. 5a entlang der Linie F-F, wobei der Mischer einstufige Mischelementsegmenten mit je zwei Drallflügeln aufweist;
Fig. 5c einen Schnitt durch den Statikmischer aus Fig. 5a entlang der Linie F-F, wobei der Mischer einstufige Mischelementsegmenten mit je einem Mischerflügel aufweist;
Fig. 6 einen Längsschnitt durch einen Statikmischer nicht gemäß der Erfindung zum Aufschrauben auf einen Gewindestutzen mit einer separat vom Mischereinsatz ausgebildeten Mischerkanalverlängerung;
Fig. 7 einen Längsschnitt durch einen Statikmischer zum Einschrauben in eine Gewindebuchse mit einem Mischerkanal mit Nebenkanälen um die letzte Mischerstufe herum;
Fig. 8 eine Seitenansicht eines Mischerflügelelements für einen Statikmischer mit Durchtrittskanälen an der letzten Mischerstufe.

### WEGE ZUR AUSFÜHRUNG DER ERFINDUNG

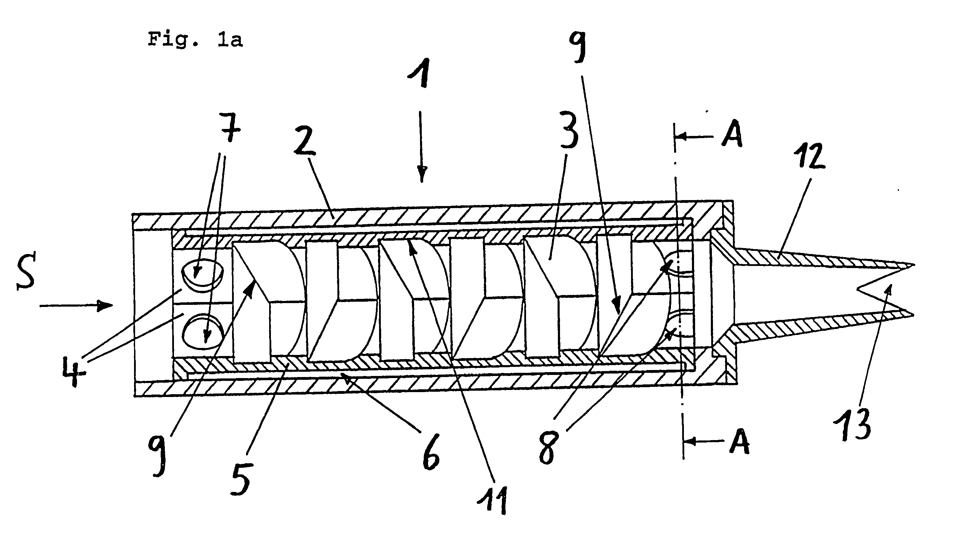

Der Grundaufbau einer bevorzugten Ausführung der Erfindung ist in Fig. 1a dargestellt, welche einen Längsschnitt durch einen Statikmischer 1 zeigt. Der dargestellte Mischer 1 wird bevorzugterweise in der Fahrzeugindustrie zum schichtweisen Einmischen einer Aushärtebeschleunigerpaste in hochviskoses PU verwendet, indem er mittels Überwurfhülse am Austritt einer Zuführungsleitung befestigt wird, aus der ein Hauptkomponentenstrom aus hochviskosem PU austritt, in dessen Zentrum über eine Düse Aushärtebeschleunigerpaste dem PU-Strom zugegeben wird. Wie zu erkennen ist, besteht der Statikmischer 1 aus einem Gehäuseteil 2 mit einer zylindrischen Bohrung, welche einen mehrteiligen Mischereinsatz, bestehend aus einem von zwei Halbschalen 4 gebildeten, einen zylindrischen Mischerkanal ausbildenden Mischerkanalgehäuse 5 und einem mehrstufigen, im Mischerkanal angeordneten, einstückig ausgebildeten Mischerflügelelement 3, umschliesst.

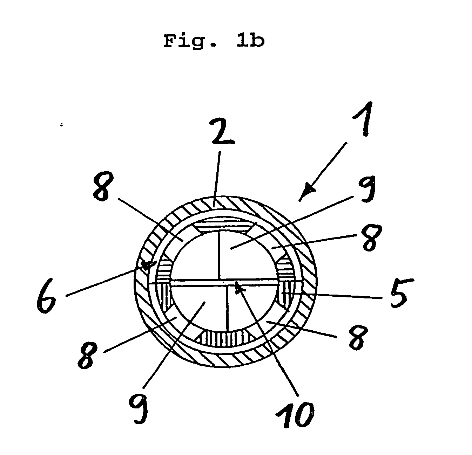

Wie aus Fig. 1a in Verbindung mit Fig. 1b, welche einen Schnitt entlang der Linie A-A in Fig. 1a darstellt, zu entnehmen ist, weist das Mischerkanalgehäuse 5 eine gestufte, zylindrische Aussenkontur auf, welche lediglich an ihren Enden den Durchmesser der das Mischerkanalgehäuse 5 in sich aufnehmenden Bohrung aufweist. Hierdurch ergibt sich über fast die gesamte axiale Erstreckung des Mischerkanals zwischen Mischerkanalgehäuse 5 und Gehäuseteil 2 ein kreisringförmiger Spalt, welcher einen koaxialen Nebenkanal 6 zum Mischerkanal bildet. Der kreisringförmige Spalt 6 ist auf der Eintrittsseite des Mischerkanals über vier in Strömungsrichtung S gesehen vor dem Mischerflügelelement 3 angeordnete und gleichmässig über den Umfang des Mischerkanals verteilte, kreisrunde und sich in radialer Richtung durch das Mischerkanalgehäuse 5 erstreckende Durchgangsöffnungen 7 in der Mischerkanalwandung verbunden, welche als Entnahmeöffnungen 7 für unvermischtes PU aus dem Aussenbereich des im Einlaufbereich des Mischerkanals in das Mischerflügelelement 3 einströmenden PU-Stroms mit einer Seele aus Aushärtebeschleunigerpaste dient. Es wird also über die Entnahmeöffnungen 7 ein unvermischter Hauptkomponententeilstrom aus dem im Mischerkanal strömenden Strom aus Haupt- und Zusatzkomponente entnommen. Axial in Strömungsrichtung S gesehen direkt nach der letzten Mischerstuf e des Mischerflügelelements 3 angeordnet weist der Mischerkanal vier langlochähnliche, gleichmässig über den Umfang des Mischerkanals verteilte und sich in radialer Richtung durch das Mischerkanalgehäuse 5 erstreckende Durchtrittsöffnungen 8 auf, welche in den kreisringförmigen Nebenkanal 6 einmünden und als Zuführungsöffnungen 8 für unvermischtes PU vom Nebenkanal 6 in den Aussenbereich des aus der letzten Mischerstufe des Mischerflügelelements 3 austretenden Mischkomponentenstroms dienen. Im dargestellten Fall sind sowohl die Entnahmeöffnungen 7 als auch die Zuführungsöffnungen 8 im Bereich der Enden des Mischerkanals angeordnet, wobei die als Langlöcher im Mischerkanalgehäuse 5 ausgebildeten Zuführungsöffnungen 8 in axialer Richtung zu dem ihnen am nächsten gelegenen Ende des Mischerkanalgehäuses 5 hin geöffnet sind und in dieser Richtung durch die das Mischerkanalgehäuse 5 axial in Durchströmungsrichtung S abstützende Anschlagschulter in der Bohrung des Gehäuseteils 2 begrenzt werden. Das verwendete Mischerflügelelement 3 weist auf jeder seiner sechs Mischerstufen zwei identische, sich jeweils 90° um die zentrale Mischerkanalachse herum erstreckende Drallflügel 9 auf, deren Rampen durch Trennstege 10 voneinander getrennt sind. Das Mischerflügelelement 3 ist derartig ausgestaltet, dass die Drallflügel 9 radial an die Mischerkanalwandung angrenzen und dass axial hintereinander angeordnete Drallflügel 9 eine entgegengesetzte Drallrichtung D aufweisen. Ein solches Mischerflügelelement 3 ist kommerziell als einstückiges Kunststoffspritzgussteil erhältlich und daher äusserst kostengünstig verfügbar. Wie der Schnittdarstellung in Fig. 1a weiter zu entnehmen ist, in welcher das Mischerkanalgehäuse 5 geschnitten dargestellt ist, während das Mischerflügelelement 3 ungeschnitten dargestellt ist, weist die Mischerkanalwandung Vertiefungen 11 auf, welche die Aussenkontur der einzelnen Drallflügel 9 des Mischerflügelelements 3 aufweisen und einen axialen Formschluss zwischen den einzelnen Drallflügeln 9 und dem Mischerkanalgehäuse 5 bewirken. Dieses ist insbesondere bei der hier bevorzugten Verwendung des Statikmischers zum Vermischen hochviskoser Stoffe von Vorteil, weil hierdurch ein Zusammendrücken des Mischerflügelelements 3 infolge hoher Strömungskräfte, und, dadurch verursacht, eine undefinierte Mischergeometrie mit resultierenden schlechten bzw. undefinierten Mischergebnissen, verhindert werden kann. Wie weiter zu erkennen ist, weist der Statikmischer 1 auf seiner Austrittsseite eine Ausbringdüse 12 mit einem dreieckigen Ausschnitt 13 in ihrer Wandung auf, welcher von der Düsenspitze her entgegen der Strömungsrichtung S spitz zuläuft.

Wird der in den Figuren 1a und 1b dargestellte Mischer 1 an einen Zuführungsstutzen angeschlossen und wird ihm über diesen Stutzen ein Strom aus hochviskosem PU mit einer oder mehreren Seelen aus Aushärtebeschleunigerpaste zugeführt, so durchströmt der grösste Teil dieses Gesamtstroms den Mischerkanal und das im Mischerkanal angeordneten Mischerflügelelement 3. Infolge der Anordnung und Geometrie der Drallflügel 9 tritt aus der letzten Mischerstufe ein Mischkomponentenstrom aus, der aus PU mit schichtweise und radial bis in den Randbereich eingemischter Aushärtebeschleunigerpaste besteht. Gleichzeitig wird im Eingangsbereich des Mischerkanals durch die Entnahmeöffnungen 7 in der Mischerkanalwandung ein Teilstrom aus unvermischtem PU in den kreisringförmigen Nebenkanal 6 eingeleitet und in diesem ausserhalb des Mischerkanals um das Mischerflügelelement 3 herumgeführt. In dem Bereich, in welchem der Mischkomponentenstrom aus dem Mischerflügelelement 3 austritt, wird der durch der Nebenkanal 6 geleitete Teilstrom aus unvermischtem PU über die Zuführungsöffnungen 8 in den Aussenbereich des Mischkomponentenstroms eingeleitet. Hierdurch wird der Mischkomponentenstrom zumindest in den Bereichen, in denen Schichten aus eingemischter Aushärtebeschleunigerpaste bis in seinen Aussenbereich hineinreichen, mit unvermischtem PU ummantelt, so dass der aus der Ausbringdüse 12 austretende Klebstoffstrom an seiner Oberfläche ausschliesslich unvermischtes PU aufweist, in seinem Inneren jedoch aus mit feinen Schichten aus Aushärtebeschleunigerpaste durchsetztem PU besteht. Wird der Mischer 1 mit seiner Düse 12 im wesentlichen senkrecht zu einer Applikationsfläche ausgerichtet und entlang der Oberfläche der Applikationsfläche in einer dem dreieckigen Ausschnitt 13 entgegengesetzten Richtung verfahren, so lässt sich eine Klebstoffraupe mit dreieckigem Querschnitt und mit dem zuvor beschriebenen Aufbau auf der Oberfläche applizieren.

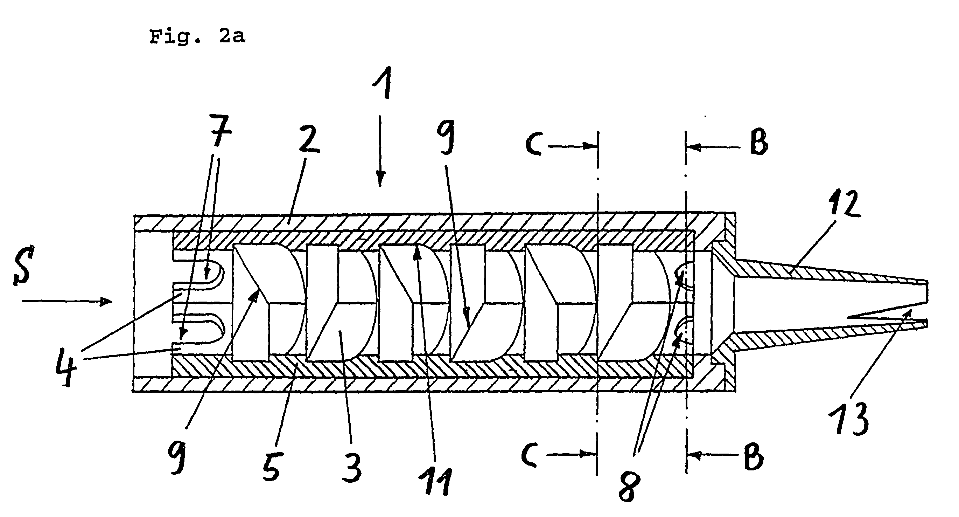

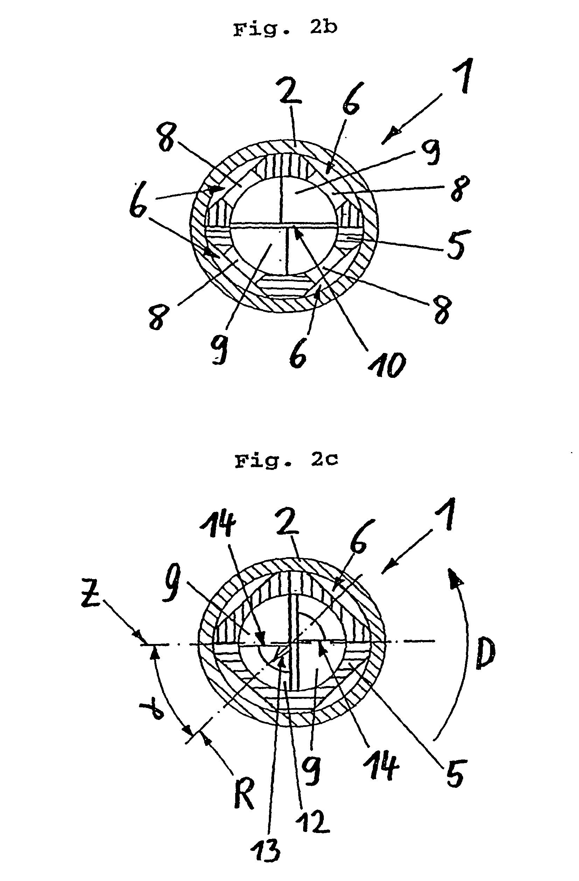

Fig. 2a zeigt einen anderen Statikmischer 1 mit einem ähnlichen Aufbau wie der Mischer 1 in Fig. 1a. Der hier dargestellte Mischer 1 weist ebenfalls ein Gehäuseteil 2, einen Mischereinsatz, umfassend ein den Mischerkanal bildendes Mischerkanalgehäuse 5 und ein Mischerflügelelement 3, und eine Ausbringdüse 12 mit dreieckigem Ausschnitt 13 auf. Auch dieser Mischer 1 ist für die Befestigung mittels einer Überwurfhülse oder mittels eines zusätzlichen Gehäuseteils an einer Zuführungsleitung vorgesehen. Im Gegensatz zu dem zuvor beschriebenen Statikmischer 1 sind hier auch die Entnahmeöffnungen 7 als axial zum nächstliegenden Ende des Mischerkanalgehäuses 5 hin offenen Langlöcher 7 in der Mischerkanalwandung ausgebildet, wobei vorgesehen ist, das diese von einer axial an das Mischerkanalgehäuse 5 anliegenden Schulter der vorgeschalteten Zuführungsleitung begrenzt werden. Die Zuführungsöffnungen 8 sind hier als radiale Öffnungen mit einem kreisabschnittförmigen Querschnitt ausgeführt. Wie zu erkennen ist, ist der Querschnitt der Entnahmeöffnungen 7 deutlich grösser als derjenige der Zuführungsöffnungen 8, wodurch sich der Druckverlust beim Abzweigen des PU-Teilstroms so gering wie möglich halten lässt.

Wie aus Fig. 2b ersichtlich ist, welche einen Schnitt entlang der Linie B-B von Fig. 2a zeigt, weist der Mischereinsatz dieser Ausführungsvariante eine Aussenkontur auf, die von einem Zylinder mit vier gleichmässig an seinem Umfang verteilten, in axialer Richtung sich erstreckenden Abplattungen gebildet wird. Hierdurch ergeben sich über die gesamte axiale Erstreckung des Mischereinsatzes bzw. des Mischerkanalgehäuses 5 zwischen Mischerkanalgehäuse 5 und Gehäuseteil 2 vier parallel zur ' Mischerkanalachse verlaufende Nebenkanäle 6 mit kreisabschnittförmigem Querschnitt, welche jeweils dem Transport eines PU-Teilstroms zwischen je einer Entnahmeöffnung 7 und einer Zuführungsöffnung 8 dienen. Es münden also jeweils genau eine Entnahmeöffnung 7 und genau eine Zuführungsöffnung 8 in eine gemeinsame, von einer Abplattung gebildete, parallel zur Mischerkanalachse ausgerichtete Aussenfläche des Mischerkanalgehäuses 5 ein. Durch diese Ausgestaltung ergeben sich also mehrere voneinander unabhängige Nebenkanäle 6 mit zugehörigen Entnahme- und Zuführungsöffnungen 7, 8, was für den Fall der Blockierung eines Kanals 6 durch unbeabsichtigtes Aushärten eines PU-Teilstroms im Kanal 6, z.B. während einer Betriebspause, die Betriebssicherheit des Mischers 1 erhöht. Ein ähnliches Ergebnis liesse sich zum Beispiel auch durch dass Anbringen axialer Nuten an einer sonst zylindrischen Aussenkontur eines Mischerkanalgehäuses 5 erreichen. Werden je zwei oder sogar mehrere separate Nebenkanäle 6 zur Speisung einer gemeinsamen Zuführungsöffnung 8 verwendet, lässt sich die Betriebssicherheit noch weiter steigern.

Wie in Fig. 2c zu erkennen ist, welche einen Schnitt entlang der Linie C-C von Fig. 2a zeigt, bilden die in Strömungsrichtung S gesehen zuletzt auf einer gemeinsamen axialen Position im Mischerkanal angeordneten Drallflügel 9, also die Drallflügel 9 der letzten Mischerstufe des Mischerflügelelements 3, ein Drallflügelpaar, derart, dass die Austrittskanten 14 der Drallflügel 9 sich im wesentlichen zu einer Linie Z verbinden lassen, die durch das Zentrum des Mischerkanals geht. Das Drallflügelpaar und die Ausbringdüse 12 sind im dargestellten Fall derartig zueinander ausgerichtet, dass sich zwischen der von den Drallflügelaustrittskanten 14 gebildeten Linie Z und einer Radiallinie R durch die Mitte des dreieckigen Ausschnitts 13 der Düse 12 ein Winkel α von 45° ergibt, wobei sich dieser Winkel α ausgehend von der Radiallinie R entgegen der Drallrichtung D des Drallflügelpaares aufspannt. Es hat sich gezeigt, dass hierdurch eine besonders vorteilhafte Anordnung der Aushärtebeschleunigerpastenschichten in einer mit der Düse 12 applizierten Klebstoffraupe erzielt werden kann, wodurch sich auch bei einem totalen Ausfall der Nebenkanäle 6 zumindest grobe Fehlklebungen infolge eines Austretens von Aushärtebeschleunigerschichten in dem Bereich der Klebstoffraupe, welcher eine direkte Kontaktfläche zu den zu verklebenden Flächen bildet, vermeiden lässt.

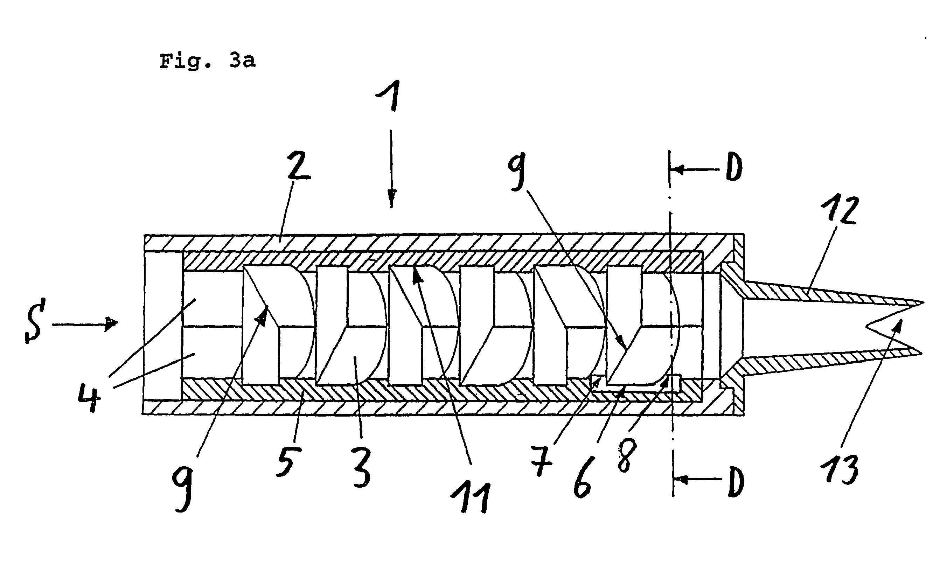

Fig. 3a zeigt einen weiteren Statikmischer 1, der im wesentlichen aus den gleichen Bauteilen besteht wie die Statikmischer 1 in den Figuren la und 2a. Im Gegensatz zu den zuvor beschriebenen Statikmischern 1 weist das zweiteilige, aus zwei Halbschalen 4 gebildete Mischerkanalgehäuse 5 jedoch eine zylindrische Aussenkontur auf, die mit der Kontur der Innenwandung der die Halbschalen 4 aufnehmenden Bohrung im Gehäuseteil 2 genau übereinstimmt, derart, dass kein Spalt mit nennenswertem Querschnitt zwischen diesen vorhanden ist. Auch weist die Mischerkanalwandung keine sich radial durch das Mischerkanalgehäuse 5 nach aussen erstreckende Durchtrittsöffnungen 7, 8 für die Entnahme und/oder Zuführung eines unvermischten PU-Teilstroms auf. Gehäuseteil 2 und Mischerkanalgehäuse 5 bilden also im dargestellten Beispiel im Gegensatz zu den vorhergehenden Beispielen keinen Nebenkanal zum Transport von unvermischtem PU.

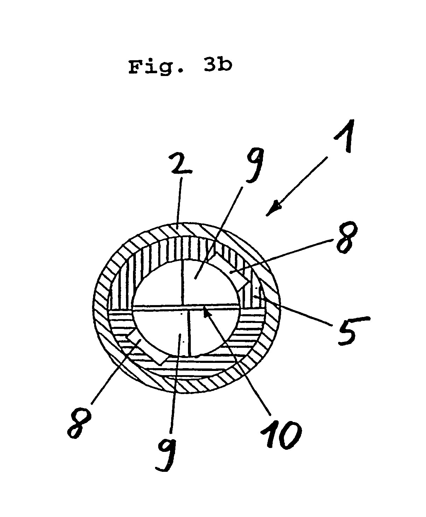

Wie aus Fig. 3a zusammen mit Fig. 3b, welche einen Schnitt entlang der Linie D-D in Fig. 3a zeigt, hervorgeht, weist die Mischerkanalwandung im Bereich der letzten Mischerstufe zwei sich parallel zur Mischerkanalachse erstreckende Nuten 6 auf, welche zusammen mit den beiden radial an die Mischerkanalwandung angrenzenden Drallflügeln 9 dieser Stufe zwei Nebenkanäle 6 um diese Drallflügel 9 herum bilden. Denkbar wäre es ebenso, Taschen an Stelle von Nuten 6 an der Innenwandung des Mischerkanals anzubringen, welche typischerweise über eine grössere'Erstreckung in Umfangsrichtung verfügen, z.B. über eine Umgangserstreckung von 90°. Die axiale Erstreckung der Nuten 6 ist derart, dass sie sowohl in Strömungsrichtung S gesehen als auch entgegen der Strömungsrichtung S gesehen über die Erstreckung des jeweiligen Drallflügels 9 im Wandungsbereich hinausgehen und dadurch vor dem jeweiligen Drallflügel 9 eine Entnahmeöffnung 7 und nach diesem eine Zuführungsöffnung 8 bilden. Die Mischerkanalwandung ist also derartig ausgestaltet, dass sie Bypasskanäle 6 zum Umleiten von Teilströmen des im Bereich der Mischerkanalwandung strömenden PUs um die Mischerflügel 9 der letzten Stufe des Mischerflügelelements 3 herum aufweist. Wird die Anzahl der Mischerstufen so ausgelegt wird, dass erst beim Durchlaufen der letzten Mischerstufe Aushärtebeschleunigerpaste bis in den Aussenbereich eingemischt wird, befindet sich im Wandbereich vor dem letzten Drallflügelpaar noch eine Strömung aus unvermischtem PU, von welcher Teilströme über die Entnahmeöffnungen 7 in die Nebenkanäle 6 eingeleitet und von dort aus über die direkt hinter den jeweiligen Drallflügeln 9 angeordneten Zuführungsöffnungen 8 in den Aussenbereich des aus der letzten Mischerflügelelementstufe austretenden Stroms aus PU mit schichtweise eingemischter Aushärtebeschleunigerpaste eingeleitet werden. Die radiale Position der Kanäle 6 bzw. der Zuführungsöffnungen 8 wird bevorzugterweise derartig gewählt, dass ein Zuführen von PU in den Bereich erfolgt, in welchem Schichten aus Aushärtebeschleunigerpaste in den Aussenbereich des Mischstroms vordringen.

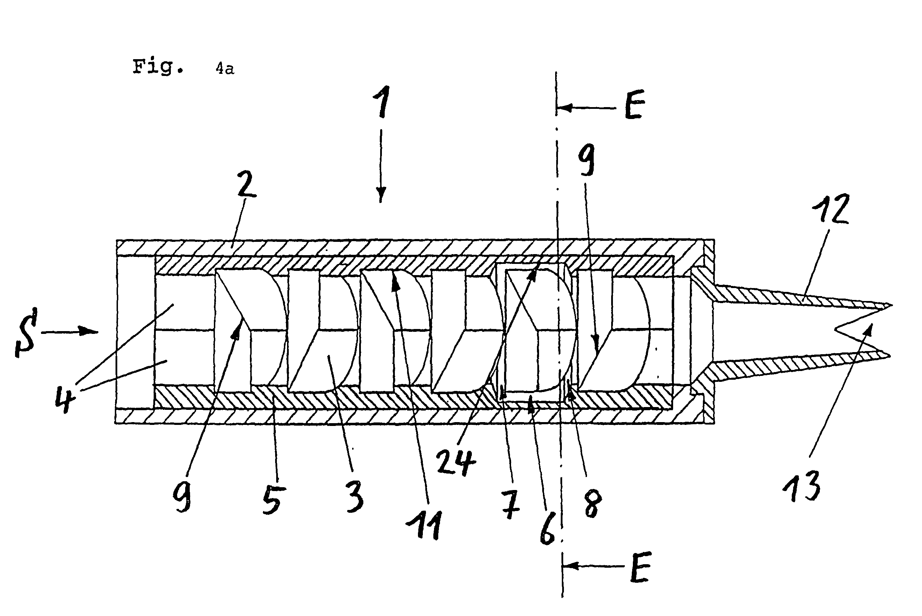

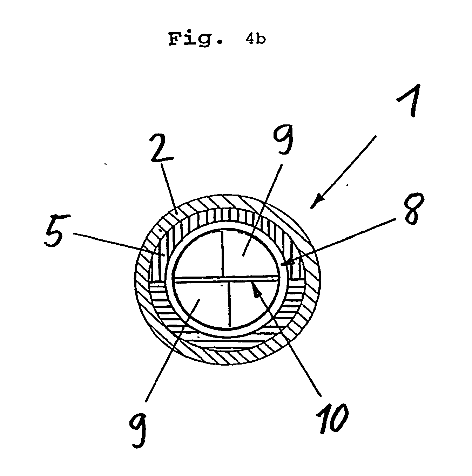

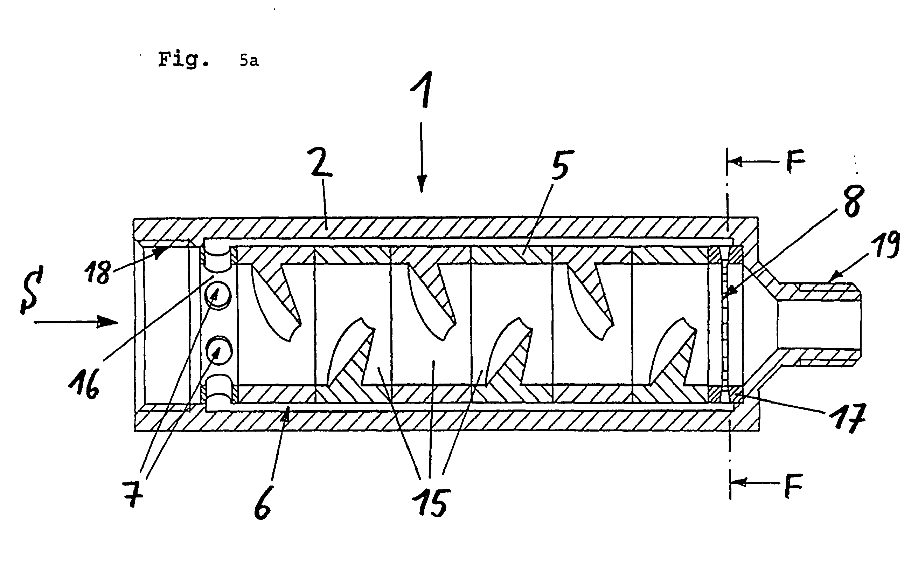

Fig. 4a zeigt einen Statikmischer 1 nicht gemäß der Erfindung mit einem im wesentlichen gleichen Aufbau wie der in den Figuren 3a und 3b gezeigte Statikmischer. Wie aus Fig. 4a zusammen mit Fig. 4b, welche einen Schnitt entlang der Linie E-E in Fig. 4a zeigt, zu erkennen ist, weist die Mischerkanalwandung des hier dargestellten Mischers 1 im Gegensatz zu dem zuvor gezeigten Mischer auf ihrer Innenseite eine sich über ihren Umfang erstreckende Vertiefung 24 auf, welche axial derart positioniert ist, dass sie im Bereich der radialen Angrenzung der Drallflügel 9 der vorletzten Mischerstufe des Mischerflügelelements 3 zusammen mit den radialen Begrenzungen dieser Drallflügel 9 kreisringsegmentförmige Umfangsspalten 6 bildet. Zudem ist die axiale Erstreckung der Vertiefung 24 derart, dass direkt vor den jeweiligen Drallflügeln eine entsprechende Entnahmeöffnung 7 und direkt hinter diesen eine entsprechende Zuführungsöffnung 8 gebildet wird, so dass die vorletzte Mischerstufe im dargestellten Fall lediglich von der drittletzten und der letzten Mischerstufe gehalten und im Mischerkanal positioniert. In den Umfangsbereichen, in denen sich keine Drallflügel befinden, bildet die Vertiefung 24 die in radialer Richtung äussere Begrenzung des von allen Komponenten durchströmten Querschnitts. Wird die Anzahl der Mischerstufen so ausgelegt wird, dass beim Durchlaufen der drittletzten Mischerstufe noch keine Aushärtebeschleunigerpaste bis in den Aussenbereich eingemischt wird, befindet sich im Wandbereich vor der vorletzten Mischerstufe noch eine Strömung aus unvermischtem PU, welche in diesem Fall als geschlossene Hüllströmung um die vorletzte Mischerstufe herum geführt wird, wobei zu beachten ist, dass die Dicke dieser Hüllströmung gross genug sein sollte, um ein Vordringen von Aushärtebeschleunigerpaste in den Aussenbereich des Mischstroms auch nach dem Durchlaufen der letzten Mischerstufe sicher zu verhindern.

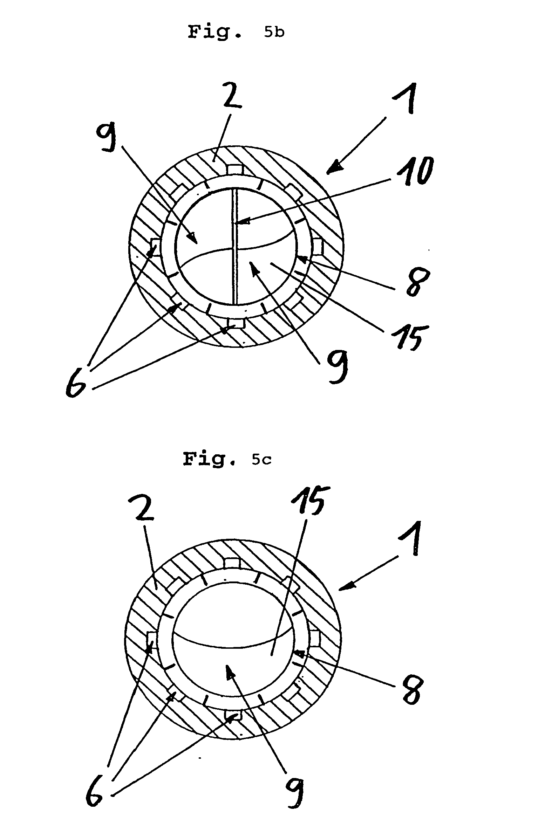

Fig. 5a zeigt einen Längsschnitt durch einen Statikmischer 1, dessen Mischerkanal und dessen Mischmittel durch einstückige, hintereinander angeordnete einstufige Mischelementsegmente 15 mit zylindrischer Aussenkontur gebildet werden. In Strömungsrichtung S gesehen vor dem ersten Mischelementsegment 15 angeordnet ist ein Lochring 16 mit acht gleichmässig über seinen Umfang verteilten radialen Bohrungen 7. In Strömungsrichtung S gesehen nach dem letzten Mischelementsegment 15 angeordnet ist eine Ringdüse 17, die aus zwei von radialen Stützstegen getrennten Ringen besteht. Die Innendurchmesser des Lochrings 16 und der Ringdüse 17 entsprechen dem Durchmesser des von den Mischelementsegmenten 15 gebildeten Mischerkanalteilstücks, deren Aussendurchmesser dem Aussendurchmesser der Mischelementsegmente 15. Der Düsenring 17, die Mischelementsegmente 15 und der Lochring 16 sind in einer Öffnung im Mischergehäuse 2 angeordnet.

Wie der Fig. 5b, welche einen Schnitt entlang der Linie F-F in Fig. 5a darstellt, entnommen werden kann, ist diese Öffnung im Gehäuse 2 eine zylindrische Bohrung mit einem Innendurchmesser, der im wesentlichen gleich dem Aussendurchmesser des Düsenrings 17, der Mischelementsegmente 15 und des Lochrings 16 ist. Die Innenwandung der Bohrung im Gehäuse 2 weist acht gleichmässig über den Umfang der Bohrung verteilt angeordnete Axialnuten 6 auf, welche als parallel zur Mischerkanalachse angeordnete Nebenkanäle 6 dem Transport von unvermischtem PU dienen und jeweils von einer der acht Bohrungen 7 des Lochrings 16, welche als Entnahmeöffnungen 7 dienen, gespeist werden. Die Axialnuten 6 münden in den Düsenring 17 ein, dessen Ringdüse 8 als Zuführungsöffnung 8 der Zuführung von unvermischtem PU in den Aussenbereich des aus dem letzten Mischelementsegment 15 austretenden Mischstroms dient, derart, dass dieser Strom vollständig von einer dünnen Schicht unvermischten PUs ummantelt wird. Die einstufigen Mischelementsegmente 15 in Fig. 5b weisen zwei gleiche Drallflügel 9 auf, deren Rampen 9 durch einen Trennsteg 10 voneinander getrennt sind. Im Gegensatz zu Fig. 5b zeigt Fig. 5c den Mischer aus Fig. 5a im Schnitt entlang der Linie F-F mit einstufigen Mischelementsegmenten 15, welche jeweils nur einen einzigen Mischerflügel 9 aufweisen.

Wie aus Fig. 5a ersichtlich ist, weist das Mischergehäuse 2 bei dem hier dargestellten Statikmischer 1 an seinem Eintritt ein Innengewinde 18 zur Befestigung des Mischers 1 am Gewindestutzen eines Zuführungsorgans, z.B. eine PU-führende Rohrleitung mit zentraler Aushärtebeschleunigerpastendüse, auf. Der in das Innengewinde 18 einzuschraubende Gewindestutzen des Zuführungselements bildet bevorzugterweise eine Schulter, welche beim Anschrauben des Mischers 1 an den Stutzen den Lochring 16, die Mischelementsegmente 15 und den Düsenring 17 axial gegeneinander presst. Zudem weist der Zuführungskanal eines geeigneten Gewindestutzens bevorzugterweise den Innendurchmesser des Lochrings 16 auf, wodurch unnötige Störungen der Strömung im Eintrittsbereich des Mischerkanals vermieden werden. Die Austrittsseite des Mischers 1 bildet ein Gewindestutzen 19 zur Befestigung einer Ausbringdüse 12 oder eines Weiterleitungselements, z.B. einer Transportleitung, am Statikmischer 1.

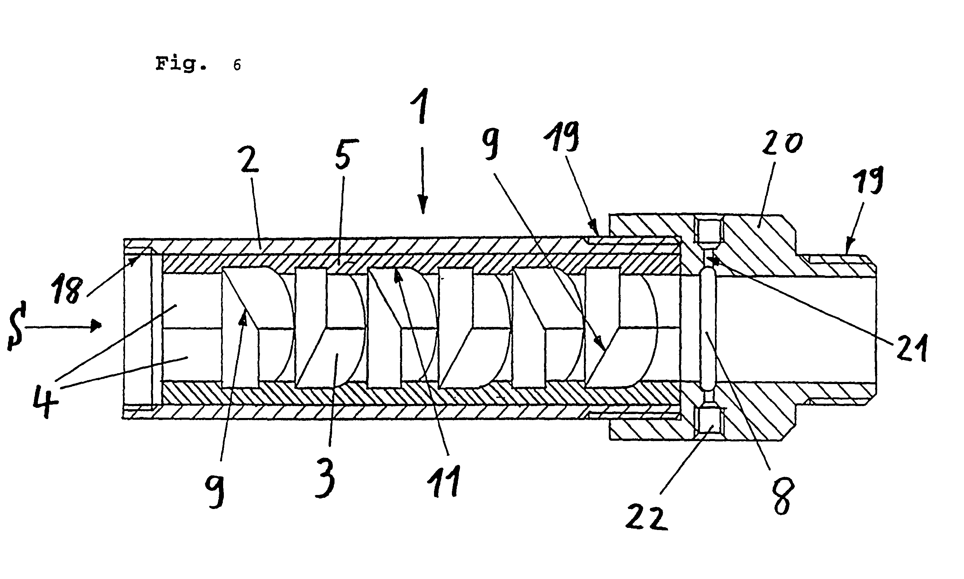

Fig. 6 zeigt einen Längsschnitt durch einen Statikmischer 1 nicht gemäß der Erfindung mit einer am Mischeraustritt angeordneten Mischerkanalverlängerung 20 zur Zuführung eines Materials zur Ummantelung des aus den Mischmitteln 3, 9 austretenden Materialstroms. Der Statikmischer weist einen Mischereinsatz auf, dessen Mischerkanalgehäuse 5, wie bei den Statikmischern der Figuren la bis 4a, von zwei Halbschalen 4 gebildet wird, in welchen das bereits aus diesen Figuren bekannte Mischerflügelelement 3 in der bereits beschriebenen Art und Weise angeordnet ist. Die Aussenkontur des Mischerkanalgehäuses 5 ist zylindrisch. Die beiden Mischerkanalhalbschalen 4 werden von einem kreiszylinderförmigen Mischergehäuse 2 umschlossen und zusammengehalten, welches auf der Eintrittsseite ein Innengewinde 18 zum Anschluss des Mischers 1 an einen Zuführungsstutzen aufweist. Auch hier ist es vorgesehen, dass der Zuführungsstutzen im Betrieb eine axial an die Halbschalen 4 anstossende Schulter bildet und der Zuführungskanal des Stutzens in etwa den Innendurchmesser des Mischerkanals aufweist. Auf der Austrittsseite weist das Mischergehäuse 2 ein Aussengewinde 19 und eine auf dieses Gewinde 19 aufgeschraubte, separat ausgebildete Mischerkanalverlängerung 20 auf, die ihrerseits wiederum auf ihrer Austrittsseite einen Gewindestutzen 19 zur Befestigung weiterführender Elemente, wie z.B. Düsen 12 oder Leitungen, aufweist. Die Mischerkanalverlängerung 20 führt im dargestellten Fall den Mischerkanal ohne Veränderung des Mischerkanalquerschnitts bis in den Gewindestutzen 19 weiter. Es ist jedoch ebenso vorgesehen, dass sich der Mischerkanal innerhalb der Mischerkanalverlängerung 20 zu deren Austritt hin verjüngt. Wie der Darstellung zu entnehmen ist, weist die Mischerkanalwandung der Mischerkanalverlängerung 20 eine umlaufende Nut 8 von halbkreisförmigem Querschnitt auf, welche mit radial nach aussen führenden Bohrungen 21 in Verbindung steht und als Zuführungsöffnung 8 für ein über die Bohrungen 21 zugeführtes Ummantelungsmaterial in den Aussenbereich des aus dem Mischerflügelelement 3 austretenden Mischstroms dient. Dient der Mischer 1, wie in den vorherigen Beispielen, dem schichtweisen Einmischen von einer Aushärtebeschleunigerpaste in einen Strom aus hochviskosem PU, so wird über die Bohrungen bevorzugterweise unvermischtes PU zugeführt. Es ist jedoch ebenso denkbar, eine weitere Komponente, welche den Aussenbereich des aus der Mischerkanalverlängerung 20 austretenden Materialstroms bilden soll, zuzuführen. Dieses ist insbesondere deshalb möglich, weil durch den dargestellten Aufbau eine externe Zuführung von Material möglich ist und somit nicht zwangsläufig ein in den Mischer eintretendes Material als Ummantelungsmaterial verwendet werden muss. Auch wenn im dargestellten Fall die Zuführungsöffnung 8 eine umlaufende Nut 8 ist, welche eine vollständige Ummantelung ermöglicht, so ist es auch hier vorgesehen, mehrere, radial nicht vollständig umlaufende Öffnungen 8 derartig am Umfang des Mischerkanals zu plazieren, dass lediglich an Positionen, an denen eingemischte Zusatzkomponentenschichten in den Aussenbereich des aus der letzten Mischerstufe austretenden Mischstroms eintreten, eine Teilummantelung des Materialstroms bzw. ein Abdecken der austretenden Zusatzkomponentenschichten stattfindet. In diesem Fall ist es von herausragender Bedeutung sicherzustellen, dass zwischen der letzten Mis-cherstufe und den Zuführungsöffnungen 8 eine möglichst kurze axiale Distanz und eine definierte radiale Positionierung vorliegt. Wie weiter aus Fig. 6 hervorgeht, weisen die radialen Zuführungsbohrungen 21 an ihren nach aussen zeigenden Enden jeweils ein Innengewinde 22 zum Anschliessen von Zuführungsleitungen für Ummantelungsmaterial auf. Auch wenn hier Innengewinde 22 verwendet werden, so sind generell alle bekannten Anschlussmittel geeignet, welche eine im wesentlichen dichte Verbindung zwischen Zuführungskanal 21 und externer Materialzuführung gewährleisten, z.B. auch Gewindestutzen mit Aussengewinde, Bajonettanschlüsse, Schnellkupplungsstutzen usw. Zudem ist es auch vorgesehen, eine ähnliche Anordnung mit nicht separat ausgebildetem Mischergehäuse 2 bzw. Mischerkanalgehäuse 5 und Mischerkanalverlängerung 20 auszubilden, wodurch sich ein Statikmischer 1 mit einem verlängerten Mischerkanalauslauf ergibt, welcher Zuführungsmittel für die externe Zuführung von Ummantelungsmaterial aufweist.

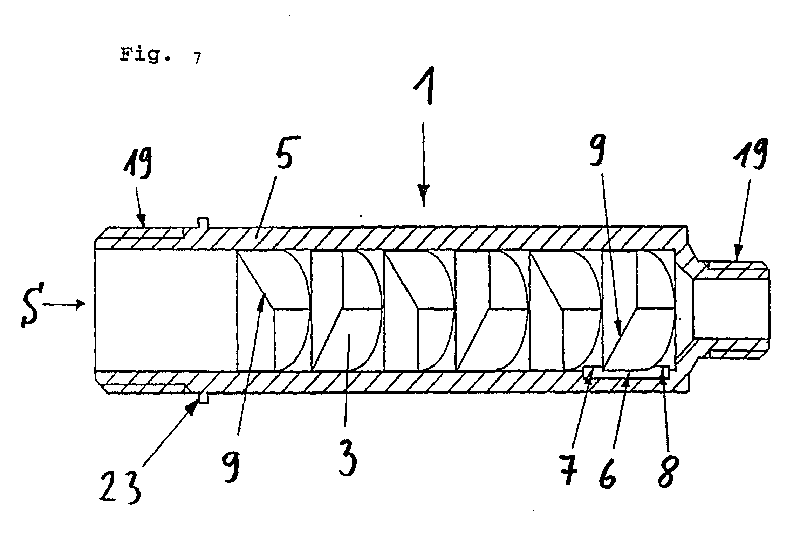

Fig. 7 zeigt einen Längsschnitt durch einen anderen Statikmischer 1, bei dem das einstückig ausgebildete Mischerkanalgehäuse 5 gleichzeitig das Mischergehäuse bildet. Auch im hier dargestellten Fall kommt das bereits aus den Figuren 1a, 2a, 3a, 4a und 6 bekannte Mischerflügelelement 3 zum Einsatz. Im Gegensatz zu den zuvor erwähnten Ausführungsbeispielen werden die Mischerflügel 9 des Mischerflügelelement 3 bei diesem Statikmischer 1 lediglich radial von der Mischerkanalwandung geführt, nicht jedoch, wie bei den anderen Beispielen, durch Formschluss in axialer Richtung von dieser gestützt. Das Mischerflügelelement 3 stützt sich hier in axialer Richtung mit seiner in Strömungsrichtung S gesehen letzten Mischerstufe an einer Schulter am Ende des Mischerkanals am Mischerkanalgehäuse 5 ab. Das Mischerkanalgehäuse 5 ist hier also im wesentlichen als Kreisringzylinder ausgebildet, in dessen Mischerkanal das Mischerflügelelement 3 axial eingeschoben wird. Wie der Schnittdarstellung zu entnehmen ist, weist die Mischerkanalwandung, ähnlich wie bei dem Mischer in Fig. 3a, im Bereich der letzten Mischerstufe sich parallel zur Mischerkanalachse erstreckende Nuten 6 auf, welche zusammen mit den radial an die Mischerkanalwandung angrenzenden Mischerflügeln 9 dieser Stufe Nebenkanäle 6 um diese Mischerstufe bzw. um die Mischerflügel 9 dieser Mischerstufe herum bilden. Die axiale Erstreckung der Nuten 6 ist derart, dass sie sowohl in Strömungsrichtung S gesehen als auch entgegen der Strömungsrichtung S gesehen über die Erstreckung der jeweiligen Mischerflügel 9 im Wandungsbereich hinausgehen und dadurch vor der letzten Mischerstufe eine oder mehrere Entnahmeöffnungen 7 und nach dieser eine oder mehrere Zuführungsöffnungen 8 bilden. Auch hier ist die Mischerkanalwandung also derartig ausgestaltet, dass sie Bypasskanäle 6 zum Umleiten eines Teilstroms um die Mischerflügel 9 der letzten Stufe des Mischerflügelelements 3 herum aufweist. Die Funktionsweise und die bevorzugte Positionierung der Kanäle 6 sind bei diesem Ausführungsbeispiel identisch wie bei Fig. 3a. Das einstückige Mischerkanalgehäuse 5, welches in diesem Fall auch das Mischergehäuse bildet, weist hier im Gegensatz zu den zuvor vorgestellten Lösungen im Eintrittsbereich ein Aussengewinde 19 mit einer Anschlagschulter 23 zum Anschluss an ein Zuführungsorgan auf. Auf diese Weise lässt sich eine genaue axiale Positionierung des Mischers 1 am Austritt eines Zuführungsorgans sicherstellen. Der Austritt des Mischers ist als Gewindestutzen 19 wie bereits bei Fig. 5a beschrieben ausgestaltet.

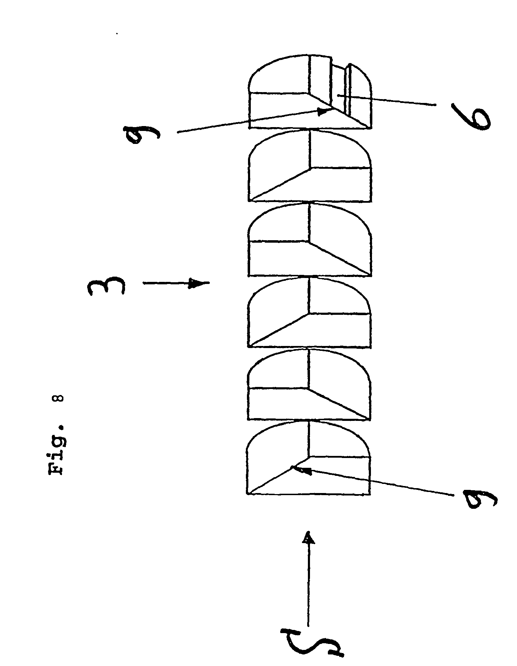

Fig. 8 zeigt eine Seitenansicht eines einstückigen sechsstufigen Mischerflügelelements 3, welches zur Anordnung in einem zylindrischen Mischerkanal vorgesehen ist, derart, dass die Mischerflügel 9 radial an die Mischerkanalwandung angrenzen. Wie zu erkennen ist, weisen die Mischerflügel 9 der in Strömungsrichtung S gesehen letzten Mischerstufe in dem Bereich, der zur radialen Angrenzung an die Mischerkanalwandung vorgesehen ist, Durchtrittskanäle 6 auf, welche einen Durchtritt von Material im Wandbereich von der Flügelvorderseite auf die Flügelrückseite ermöglichen und somit auch hier einen Bypass 6 für einen Komponententeilstrom um den jeweiligen Mischerflügel 9 herum bereitstellen. Die Funktionsweise dieser Durchtrittskanäle 6 ist bei Anordnung des Mischerflügelelements 3 in einem zylindrischen Mischerkanal die gleiche wie bei den Figuren 3a, 3b und 6, jedoch werden hier die Zuführungsmittel 6, 7, 8 im wesentlichen durch die Ausgestaltung des Mischerflügelelements 3 erzielt, was die Verwendung äusserst einfacher und damit kostengünstiger Mischerkanalgehäuse 5 erlaubt.

Mit Vorteil werden die einzelnen Bestandteile der zuvor beschriebenen erfindungsgemässen Mischer aus Kunststoff im Spritzgussverfahren hergestellt, da sich hierdurch eine kostengünstige Serienproduktion realisieren lässt, welche die Verwendung der Mischer als Einwegmischer wirtschaftlich macht. Es ist jedoch ebenso vorgesehen, einzelne Teile des Mischer, z.B. Gehäuseteile 2, 5 oder die beschriebene Mischerkanalverlängerung 20, aus anderen Materialien, insbesondere Metall, herzustellen.

Auch wenn die Ausführungsbeispiele im wesentlichen am Beispiel einer Vermischung von hochviskosem PU mit einer Aushärtebeschleunigerpaste beschrieben wurden, so sei an dieser Stelle darauf hingewiesen, dass die Erfindung nicht auf diese Anwendung beschränkt ist, sondern sich mit Vorteil auch für das Vermischen anderer reaktiver oder auch nicht reaktiver Stoffe miteinander eignet, bei denen sichergestellt werden soll, dass der Aussenbereich des Mischstroms von einem Stoff genau definierter Zusammensetzung gebildet wird. Werden Zuführungsöffnungen 8 verwendet, welche eine in Umfangsrichtung gesehen begrenzte Erstreckung aufweisen, so sind diese mit Vorteil unter Berücksichtigung des vom jeweiligen Mischmitteln 3, 9, 15 erzeugten spezifischen Einmischbildes axial möglichst nah am Austritt des Mischmittels und radial so am Umfang des Mischerkanals zu positionieren, dass die Zuführung dort erfolgt, wo nicht erwünschtes Material bis in den Aussenbereich des Mischstroms hinein vordringt. Da diese Bereiche, wie bereits erwähnt wurde, vom einzelnen Mischerelement 3, 9, 15 abhängig sind und insbesondere von dessen Geometrie im Austrittsbereich, ist es offensichtlich, dass eine genaue und zudem dauerhafte Positionierung, axial wie radial, zwischen Mischmitteln 3, 9, 15 und Zuführungsöffnungen 8 unabdingbar ist für ein gutes und reproduzierbares Ergebnis. Geeignete Positioniermittel, z.B. Positioniernasen und Anschlagschultern, sind dem Fachmann geläufig und werden daher nicht näher erläutert.

Während in der vorliegenden Anmeldung bevorzugte Ausführungen der Erfindung beschrieben sind, ist klar darauf hinzuweisen, dass die Erfindung nicht auf diese Beschränkt ist und in auch anderer Weise innerhalb des Umfangs der folgenden Ansprüche ausgeführt werden kann.

## Patentansprüche

1. Statikmischer (1) mit einem von einem Mischerkanalgehäuse (5) gebildeten Mischerkanal (4) und mit im Mischerkanal (4) angeordneten Mischmitteln (3, 9) zum Mischen einer Hauptkomponente mit einer oder mehreren Zusatzkomponenten beim Durchströmen des Mischerkanals (4), wobei der Statikmischer (1) in den Mischerkanal (4) einmündende Zuführungsmittel (6, 7, 8) aufweist zum Zuführen eines oder mehrerer Ströme unvermischter Hauptkomponente oder einer weiteren Komponente in den Aussenbereich eines aus den Mischmitteln (3, 9) austretenden ganz oder teilweise durchmischten Mischkomponentenstroms zur Bildung einer vollständigen oder teilweisen Ummantelung aus ungemischter Hauptkomponente oder der weiteren Komponente um den Mischkomponentenstrom herum, **dadurch gekennzeichnet, dass** die Zuführungsmittel (6, 7, 8) einen oder mehrere innerhalb des Statikmischers (1) angeordnete und über eine oder mehrere Zuführungsöffnungen (8) in den Mischerkanal (4) einmündende Nebenkanäle (6) zum Transport von Hauptkomponente oder einer weiteren Komponente aufweisen und die Zuführungsöffnungen (8) axial in Strömungsrichtung gesehen direkt nach dem letzten Mischmittel (3, 9) angeordnet sind.

2. Statikmischer (1) nach Anspruch 1, **dadurch gekennzeichnet, dass** die Nebenkanäle (6) über mindestens einen Teil der axialen Erstreckung des Mischerkanals (4) im wesentlichen parallel zur Mischerkanalachse verlaufen.

3. Statikmischer (1) nach einem der Ansprüche 1 bis 2, **dadurch gekennzeichnet, dass** jeder Nebenkanal (6) über genau eine Zuführungsöffnung (8) in den Mischerkanal (4) einmündet, und insbesondere, dass je zwei Nebenkanäle (6) über eine gemeinsame Zuführungsöffnung (8) in den Mischerkanal (4) einmünden.

4. Statikmischer (1) nach einem der Ansprüche 1 bis 3, **dadurch gekennzeichnet, dass** die Zuführungsöffnungen (8) eine oder mehrere, insbesondere radial nach aussen durch das Mischerkanalgehäuse (5) sich erstreckende Öffnungen (8) in der Mischerkanalwandung sind, und insbesondere, dass diese einen kreisrunden, kreisabschnittförmigen oder langlochähnlichen Querschnitt aufweisen.

5. Statikmischer (1) nach einem der Ansprüche 1 bis 4, **dadurch gekennzeichnet, dass** die Nebenkanäle (6) über eine oder mehrere, in Strömungsrichtung (S) gesehen stromaufwärts von den Zuführungsöffnungen (8), und insbesondere in Strömungsrichtung (S) gesehen vor den Mischmitteln (3, 9), angeordnete Entnahmeöffnungen (7) mit dem Mischerkanal (4) verbunden sind zur Entnahme eines oder mehrerer unvermischter Hauptkomponententeilströme aus dem im Mischerkanal (4) strömenden Strom aus Haupt- und Zusatzkomponente.

6. Statikmischer (1) nach Anspruch 5, **dadurch gekennzeichnet, dass** die Nebenkanäle (6) mindestens teilweise von der Mischerkanalwandung gebildet werden und insbesondere, dass die Innenwandung des Mischerkanalgehäuses (5) eine oder mehrere axiale Nuten (6) oder Taschen oder eine sich über den Umfang der Innenwandung erstreckende Vertiefung (24) aufweist, welche zusammen mit der äusseren radialen Begrenzung eines oder mehrerer Mischmittel (3, 9) einen oder mehrere Nebenkanäle (6) bilden oder bildet zum Umleiten eines oder mehrerer Teilströme aus Hauptkomponente um das oder die radial an die Nuten (6) oder Taschen oder die Vertiefung (24) angrenzenden Mischmittel (3, 9) herum, und insbesondere, dass der Statikmischer ein mehrstufiges Mischmittel (3) umfasst und die axiale Erstreckung der Nuten (6) oder Taschen oder der Vertiefung (24) derart ist, dass eine Umleitung eines oder mehrerer Teilströme um genau eine Mischerstufe des mehrstufigen Mischmittels (3, 9) herum erfolgen kann und insbesondere, dass die Nuten (6) oder Taschen oder die Vertiefung (24) axial derartig positioniert sind oder ist, dass eine Umleitung des Teilstroms oder der Teilströme ausschliesslich um die in Strömungs richtung (S) gesehen vorletzte Mischerstufe des Mischmittels (3) herum erfolgen kann.

7. Statikmischer (1) nach Anspruch 5, **dadurch gekennzeichnet, dass** die Entnahmeöffnungen (7) eine oder mehrere, insbesondere radial nach aussen durch das Mischerkanalgehäuse (5) sich erstreckende Öffnungen (7) in der Mischerkanalwandung sind, und insbesondere, dass diese einen kreisrunden, kreisabschnittförmigen oder langlochähnlichen Querschnitt aufweisen.

8. Statikmischer (1) nach einem der Ansprüche 5 bis 7, **dadurch gekennzeichnet, dass** der Gesamtquerschnitt der Entnahmeöffnungen (7) je Nebenkanal (6) grösser ist als der Gesamtquerschnitt der Zuführungsöffnungen (8) je Nebenkanal (6).

9. Statikmischer (1) nach einem der Ansprüche 1 bis 8, **dadurch gekennzeichnet, dass** die Mischmittel (3, 9) mindestens zwei im Mischerkanal (4) axial hintereinander angeordnete und radial an die Mischerkanalwandung angrenzende Mischerflügel (9), insbesondere als Drallflügel (9) ausgestaltete Mischerflügel (9), umfassen, und insbesondere, dass axial hintereinander angeordnete Mischerflügel (9) derartig ausgestaltet sind, dass sie die durch den Mischerkanal (4) hindurchströmenden Komponenten abwechselnd in entgegengesetzte Richtungen ablenken.

10. Statikmischer (1) nach Anspruch 9, **dadurch gekennzeichnet, dass** die Zuführungsmittel (6, 7, 8) derartig ausgestaltet sind, dass die Anzahl der Zuführungsöffnungen (8) der Anzahl oder einem ganzzahligen Vielfachen der Anzahl der Mischerflügel (9) entspricht, die axial in Strömungsrichtung gesehen als Letzte auf einer gemeinsamen axialen Position im Mischerkanal (4) angeordnet sind, und insbesondere, dass als Letzte auf einer gemeinsamen axialen Position zwei Mischerflügel (9) angeordnet sind und die Zuführungsmittel (6, 7, 8) vier gleichmässig über den Umfang der Mischerkanalwandung verteilte Zuführungsöffnungen (8) aufweisen.

11. Statikmischer (1) nach einem der Ansprüche 1 bis 10, **dadurch gekennzeichnet, dass** der Statikmischer (1) einen das Mischerkanalgehäuse (5) und die Mischmittel (3, 9) umfassenden einstückigen oder mehrteiligen Mischereinsatz und ein den Mischereinsatz mit einer Öffnung in sich umschliessendes, separat vom Mischeinsatz ausgebildetes Gehäuseteil (2) aufweist.

12. Statikmischer (1) nach Anspruch 11, **dadurch gekennzeichnet, dass** der Mischereinsatz in seinem Aussenbereich eine von der Kontur der Innenwandung der ihn umschliessenden Öffnung des Gehäuseteils (2) abweichende Aussenkontur aufweist zur Bildung eines oder mehrerer Nebenkanäle (6) zusammen mit der Innenwandung dieser Öffnung.

13. Statikmischer (1) nach Anspruch 12, **dadurch gekennzeichnet, dass** der Mischereinsatz in seinem Aussenbereich eine oder mehrere axial verlaufende Nuten (6), insbesondere mit rechteckigem Querschnitt, aufweist, welche zusammen mit einem Teil der Innenwandung der sie umschliessenden Öffnung des Gehäuseteils (2) einen oder mehrere Nebenkanäle (6) ausbilden.

14. Statikmischer (1) nach einem der Ansprüche 12 bis 13, **dadurch gekennzeichnet, dass** die Aussenkontur des Mischereinsatzes und die Kontur der diesen umschliessenden Öffnung des Gehäuseteils (2) derartig ausgestaltet sind, dass diese zusammen einen oder mehrere Nebenkanäle (6) mit kreisringförmigem oder kreisringsegmentförmigem Querschnitt bilden.

15. Statikmischer (1) nach einem der Ansprüche 12 bis 14, **dadurch gekennzeichnet, dass** die Aussenkontur des Mischereinsatzes und die Kontur der diesen umschliessenden Öffnung des Gehäuseteils (2) derartig ausgestaltet sind, dass diese zusammen einen oder mehrere Nebenkanäle (6) mit kreisabschnittförmigem Querschnitt bilden.

16. Statikmischer (1) nach einem der Ansprüche 11 bis 15, **dadurch gekennzeichnet, dass** die Öffnung im . Gehäuseteil (2), welche den Mischereinsatz umschliesst, zylindrisch ist und insbesondere, dass das Gehäuseteil (2) mindestens in Teilbereichen als Kreisringzylinder ausgebildet ist.

17. Statikmischer (1) nach einem der Ansprüche 1 bis 16, **dadurch gekennzeichnet, dass** dieser Anschlussmittel (18, 19, 22, 23), insbesondere Verschraubungselemente (18, 19, 22), zum Anschliessen an Zuführungen für Hauptkomponente, Zusatzkomponente und/oder eine weitere Komponente aufweist, und insbesondere, dass der Statikmischer (1) Anschlussmittel (19), insbesondere Verschraubungselemente (19), für eine Ausbringdüse (12) oder ein Weiterleitungsorgan aufweist.

18. Statikmischer (1) nach einem der Ansprüche 1 bis 17, **dadurch gekennzeichnet, dass** der Mischer (1) eine Ausbringdüse (12) aufweist und insbesondere, dass die Ausbringdüse (12) an ihrer Spitze einen, insbesondere dreieckigen, entgegen der Strömungsrichtung (S) zulaufenden Ausschnitt (13) in ihrer Wandung aufweist zum Ausbringen einer Komponentenraupe, insbesondere von im wesentlichen dreieckigem Querschnitt, beim horizontalen Verfahren der senkrecht zu einer Applikationsfläche ausgerichteten Ausbringdüse (12) in horizontaler und dem Ausschnitt (13) entgegengesetzter Richtung während dem Applizieren.

19. Statikmischer (1) nach Anspruch 9 und nach Anspruch 18, **dadurch gekennzeichnet, dass** die Mischmittel (3, 9) derartig ausgestaltet sind, dass die axial in Strömungsrichtung (S) gesehen zuletzt angeordneten Mischerflügel (9) als auf einer gemeinsamen axialen Position im Mischerkanal (4) angeordnetes Mischerflügelpaar ausgebildet sind und deren Austrittskanten (14) in Strömungsrichtung (S) betrachtet im wesentlichen eine Linie (Z) durch das Zentrum des Mischerkanals (4) bilden, und dass das Mischmittel (3, 9) und die Ausbringdüse (12) derartig zueinander ausgerichtet sind, dass die von den Austrittskanten (14) des Mischerflügelpaares gebildete Linie (Z) einen Winkel (α) im Bereich von 20° bis 60°, insbesondere im Bereich von 30° bis 50° und insbesondere von 35° bis 45° mit einer Radiallinie (R) durch die Mitte des Ausschnitts (13) in der Düse (12) bildet, und insbesondere, dass sich dieser Winkel (α) ausgehend von der Radiallinie (R) entgegen der Drallrichtung (D) des Mischerflügelpaares aufspannt.

20. Statikmischer (1) nach einem der Ansprüche 1 bis 19, **dadurch gekennzeichnet, dass** die Mischmittel (3, 9) und/oder das Mischerkanalgehäuse (4, 5) ganz oder teilweise aus Kunststoff sind.

21. Verfahren zur Bildung eines Mischkomponentenstroms mittels eines Statikmischers (1) gemäss einem der vorangehenden Ansprüche aus einer ganz oder teilweise mit einer oder mehreren Zusatzkomponenten vermischten Hauptkomponente, welcher teilweise oder vollständig mit unvermischter Hauptkomponente oder einer weiteren Komponente ummantelt ist, wobei es die folgenden Schritte umfasst:
a) Vermischen eines Stroms aus Hauptkomponente und eines oder mehrerer Ströme aus einer oder mehreren reaktiven oder nicht reaktiven Zusatzkomponenten mit einem in einem Mischerkanal (4) angeordneten statischen Mischelement (3)zu einem ganz oder teilweise durchmischten Mischkomponentenstrom;
b) Zuführen eines oder mehrerer Ströme unvermischter Hauptkomponente oder einer weiteren Komponente im Mischerkanal (4)in den Aussenbereich des ganz oder teilweise durchmischten Mischkomponentenstroms zur Bildung einer vollständigen oder teilweisen Ummantelung aus unvermischter Hauptkomponente oder aus der weiteren Komponente um den Mischkomponentenstrom herum,
**dadurch gekennzeichnet, dass** der oder die zur vollständigen oder teilweisen Ummantelung zugeführten Ströme aus unvermischter Hauptkomponente oder einer weiteren Komponente dem Aussenbereich des ganz oder teilweise durchmischten Mischkomponentenstroms axial in Strömungsrichtung gesehen direkt nach dem statischen Mischelement (3)zugeführt werden.

22. Verfahren nach Anspruch 21, **dadurch gekennzeichnet, dass** der oder die zur vollständigen oder teilweisen Ummantelung zugeführten Ströme aus unvermischter Hauptkomponente bestehen und dem im Mischerkanal (4) strömen den Strom aus Haupt- und Zusatzkomponente entnommen werden.

23. Verfahren nach einem der Ansprüche 21 oder 22, **dadurch gekennzeichnet, dass** die zur Ummantelung zugeführten Ströme aus unvermischter Hauptkomponente im Eintrittsbereich des statischen Mischelements (3, 9) dem in dieses einströmenden Strom aus Haupt- und Zusatzkomponente entnommen werden und im Austrittsbereich des Mischelements (3, 9) dem Mischkomponentenstrom zugeführt werden.

24. Verfahren nach einem der Ansprüche 21 bis 23, **dadurch gekennzeichnet, dass** ein mehrstufiges statisches Mischelement (3, 9) verwendet wird und die zur Ummantelung zugeführten Ströme aus unvermischter Hauptkomponente im Bereich zwischen den Mischelementstufen, insbesondere im Bereich vor der in Strömungsrichtung gesehen vorletzten und letzten Mischelementstufe dem durch dieses hindurchströmenden Strom aus Haupt- und Zusatzkomponente entnommen werden und nach dieser Mischelementstufe oder diesen Mischelementstufen dem Mischkomponentenstrom zugeführt werden.

25. Verfahren nach einem der Ansprüche 21 bis 24, **dadurch gekennzeichnet, dass** ein statisches Mischelement (3, 9) mit Drallflügeln (9) verwendet wird, und insbesondere, dass eine schichtweise Einmischung der Zusatzkomponente in die Hauptkomponente erfolgt.

26. Verfahren nach einem der Ansprüche 21 bis 25, **dadurch gekennzeichnet, dass** die Hauptkomponente ein hochviskoser Einkomponentenklebstoff und die Zusatzkomponente ein Aushärtebeschleuniger ist, und insbesondere, dass der Einkomponentenklebstoff PU ist.

27. Anwendung des Verfahrens nach einem der Ansprüche 21 bis 26 zur Erzeugung einer Klebstoffraupe mit einem Kern aus PU mit schichtweise eingemischtem Aushärtebeschleuniger und einer Umhüllung aus unvermischtem PU für das Verkleben von Bauteilen miteinander.

28. Verwendung des Statikmischers (1) nach einem der Ansprüche 1 bis 20 zum Verarbeiten hochviskoser Einkomponentenklebstoffe mit Aushärtebeschleunigern, insbesondere für das Verarbeiten von hochviskosem PU mit Aushärtebeschleunigerpasten.

## Claims

1. Static mixer (1) with a mixer channel (4) formed by a mixer channel housing (5), and with mixing means (3, 9) which are arranged in the mixer channel (4) and which mix a main component with one or more additives during passage through the mixer channel (4), the static mixer (1) having delivery means (6, 7, 8) which open into the mixer channel (4) and deliver one or more streams of unmixed main component or of a further component into the outer region of a completely or partially mixed mixing component stream emerging from the mixing means (3, 9) to form a complete or partial jacket of unmixed main component or of the further component around the mixing component stream, **characterized in that** the delivery means (6, 7, 8) have one or more secondary channels (6) which are arranged inside the static mixer (1), open into the mixer channel (4) via one or more delivery openings (8) and are used to transport the main component or a further component, and the delivery openings (8), viewed axially in the direction of flow, are arranged directly after the last mixing means (3, 9).

2. Static mixer (1) according to Claim 1, **characterized in that** the secondary channels (6) run substantially parallel to the mixer channel axis, along at least part of the axial extent of the mixer channel (4).

3. Static mixer (1) according to one of Claims 1 and 2, **characterized in that** each secondary channel (6) opens into the mixer channel (4) via exactly one delivery opening (8), and in particular **in that** two secondary channels (6) each open into the mixer channel (4) via a common delivery opening (8).

4. Static mixer (1) according to one of Claims 1 to 3, **characterized in that** the delivery openings (8) are one or more openings (8) in the mixer channel wall which in particular extend radially outwards through the mixer channel housing (5), and in particular **in that** these openings (8) have a cross section that is circular, shaped as a portion of a circle or like an oblong hole.

5. Static mixer (1) according to one of Claims 1 to 4, **characterized in that** the secondary channels (6) are connected to the mixer channel (4) via one or more discharge openings (7) arranged upstream from the delivery openings (8), viewed in the direction of flow (S), and in particular before the mixing means (3, 9), viewed in the direction of flow (S), in order to discharge one or more unmixed main component partial streams from the stream of main component and additive flowing in the mixer channel (4).

6. Static mixer (1) according to Claim 5, **characterized in that** the secondary channels (6) are formed at least partially by the mixer channel wall, and in particular **in that** the inner wall of the mixer channel housing (5) has one or more axial grooves (6) or pockets or a recess (24) extending about the periphery of the inner wall and these, together with the outer radial limit of one or more mixing means (3, 9), form one or more secondary channels (6) for diverting one or more partial streams of main component around the mixing means (3, 9) radially adjoining the grooves (6) or pockets or the recess (24), and in particular **in that** the static mixer comprises a multi-stage mixing means (3), and the axial extent of the grooves (6) or pockets or of the recess (24) is such that one or more partial streams can be diverted around exactly one mixer stage of the multi-stage mixing means (3, 9), and in particular in that the grooves (6) or pockets or the recess (24) are axially positioned in such a way that the partial stream or partial streams can be diverted exclusively around the penultimate mixer stage of the mixing means (3), as viewed in the direction of flow (S).

7. Static mixer (1) according to Claim 5,
**characterized in that** the discharge openings (7) are one or more openings (7) in the mixer channel wall which in particular extend radially outwards through the mixer channel housing (5), and in particular **in that** these openings (7) have a cross section that is circular, shaped as a portion of a circle or as an oblong hole.

8. Static mixer (1) according to one of Claims 5 to 7, **characterized in that** the total cross section of the discharge openings (7) for each secondary channel (6) is larger that the total cross section of the delivery openings (8) for each secondary channel (6).

9. Static mixer (1) according to one of Claims 1 to 8, **characterized in that** the mixing means (3, 9) comprise at least two mixer blades (9) arranged axially in succession in the mixer channel (4) and radially adjoining the mixer channel wall, in particular mixer blades (9) designed as swirl blades (9), and in particular **in that** the mixer blades (9) arranged in axial succession are designed in such a way that they divert the components passing through the mixer channel (4) alternately in opposite directions.

10. Static mixer (1) according to Claim 9, **characterized in that** the delivery means (6, 7, 8) are designed such that the number of delivery openings (8) matches the number or an integral multiple of the number of mixer blades (9) which are arranged, viewed axially in the direction of flow, as the last feature at a common axial position in the mixer channel (4), and in particular **in that** two mixer blades (9) are arranged as the last feature at a common axial position, and the delivery means (6, 7, 8) have four delivery openings (8) distributed uniformly about the periphery of the mixer channel wall.

11. Static mixer (1) according to one of Claims 1 to 10, **characterized in that** the static mixer (1) has a one-piece or multi-piece mixer insert comprising the mixer channel housing (5) and the mixing means (3, 9), and a housing part (2) designed separately from the mixer insert and enclosing the mixer insert with an opening therein.

12. Static mixer (1) according to Claim 11, **characterized in that** the outer area of the mixer insert has an outer contour deviating from the contour of the inner wall of the opening of the housing part (2) enclosing the insert, in order to form one or more secondary channels (6) together with the inner wall of this opening.

13. Static mixer (1) according to Claim 12, **characterized in that** the outer area of the mixer insert has one or more axially extending grooves (6), in particular with a rectangular cross section, which, together with part of the inner wall of the opening of the housing part (2) enclosing them, form one or more secondary channels (6).

14. Static mixer (1) according to one of Claims 12 and 13, **characterized in that** the outer contour of the mixer insert and the contour of the opening of the housing part (2) enclosing this insert are designed in such a way that they together form one or more secondary channels (6) with a cross section in the shape of a circular ring or in the shape of a segment of a circular ring.

15. Static mixer (1) according to one of Claims 12 to 14, **characterized in that** the outer contour of the mixer insert and the contour of the opening of the housing part (2) enclosing the insert are designed in such a way that they together form one or more secondary channels (6) with a cross section in the shape of a portion of a circle.

16. Static mixer (1) according to one of Claims 11 to 15, **characterized in that** the opening in the housing part (2) enclosing the mixer insert is cylindrical, and in particular **in that** the housing part (2) is designed, at least in partial areas, as an annular cylinder.

17. Static mixer (1) according to one of Claims 1 to 16, **characterized in that** the mixer has connecting means (18, 19, 22, 23), in particular screwing elements (18, 19, 22), for connection to delivery means for main component, additive and/or a further component, and in particular **in that** the static mixer (1) has connecting means (19), in particular screwing elements (19), for a dispensing nozzle (12) or a transfer member.

18. Static mixer (1) according to one of Claims 1 to 17, **characterized in that** the mixer (1) has a dispensing nozzle (12), and in particular **in that** the dispensing nozzle (12) has, within the wall at its tip, an in particular triangular notch (13) which tapers counter to the direction of flow (S), for dispensing a component bead, in particular one of substantially triangular cross section, during horizontal travel of the dispensing nozzle (12), oriented perpendicular to an application surface, in a horizontal direction counter to the notch (13) during the application.

19. Static mixer (1) according to Claim 9 and Claim 18, **characterized in that** the mixing means (3, 9) are designed in such a way that the mixer blades (9) arranged axially last, viewed in the direction of flow (S), are designed as a mixer blade pair arranged at a common axial position in the mixer channel (4), and their outlet edges (14), viewed in the direction of flow (S), substantially form a line (Z) through the centre of the mixer channel (4), and **in that** the mixing means (3, 9) and the dispensing nozzle (12) are oriented relative to one another such that the line (Z) formed by the outlet edges (14) of the mixer blade pair forms an angle (α) of 20° to 60°, in particular of 30° to 50° and in particular of 35° to 45° with a radial line (R) through the centre of the notch (13) in the nozzle (12), and in particular **in that**, starting from the radial line (R), this angle (α) opens counter to the swirl direction (D) of the mixer blade pair.

20. Static mixer (1) according to one of Claims 1 to 19, **characterized in that** the mixing means (3, 9) and/or the mixer channel housing (4, 5) are made entirely or partially of plastic.

21. Method for forming a mixing component stream, by means of a static mixer (1) according to one of the preceding claims, from a main component mixed completely or partially with one or more additives, which stream is partially or completely jacketed by unmixed main component or a further component, said method comprising the following steps:
a) mixing a stream of main component and one or more streams of one or more reactive or non-reactive additives using a static mixer element (3) arranged in a mixer channel (4) to create a completely or partially mixed mixing component stream;
b) delivering one or more streams of unmixed main component or of a further component in the mixer channel (4) to the outer area of the completely or partially mixed mixing component stream so as to create a complete or partial jacket of unmixed main component or of the further component around the mixing component stream,
**characterized in that** the stream(s) of unmixed main component and of a further component delivered in order to create the complete or partial jacket are delivered to the outer area of the completely or partially mixed mixing component stream directly after the static element (3), viewed in the direction of flow.

22. Method according to Claim 21, **characterized in that** the streams delivered in order to create the complete or partial jacket are composed of unmixed main component and are discharged in the stream of main component and additive flowing in the mixer channel (4) .

23. Method according to one of Claims 21 and 22, **characterized in that** the streams of unmixed main component delivered to create the jacket in the inlet region of the static mixer element (3, 9) are discharged from the stream of main component and additive entering this element, and delivered to the mixing component stream in the outlet region of the mixer element (3, 9).

24. Method according to one of Claims 21 to 23, **characterized in that** a multi-stage static mixer element (3, 9) is used, and the streams of unmixed main component delivered to form the jacket are discharged in the region between the mixer element stages, in particular in the region before the penultimate and last mixer element stage, viewed in the direction of flow, from the stream of main component and additive flowing through this, and are delivered to the mixing component stream after this mixer element stage or these mixer element stages.

25. Method according to one of Claims 21 to 24, **characterized in that** a static mixer element (3, 9) with swirl blades (9) is used, and in particular **in that** the additive is mixed into the main component in layers.

26. Method according to one of Claims 21 to 25, **characterized in that** the main component is a highly viscous single-component adhesive, and the additive is a hardening accelerator, and in particular **in that** the single-component adhesive is PU.

27. Application of the method according to one of Claims 21 to 26 for generating an adhesive bead having a core of PU with hardening accelerator added layer-by-layer and having an envelope of unmixed PU for adhesively bonding component parts to one another.

28. Use of the static mixer (1) according to one of Claims 1 to 20 for processing highly viscous single-component adhesives with hardening accelerator, in particular for processing of highly viscous PU with hardening accelerator pastes.

## Revendications

1. Mélangeur statique (1) comprenant un canal de mélange (4) formé par un boîtier de canal de mélange (5) et des moyens de mélange (3, 9) disposés dans le canal de mélange (4) pour mélanger un composant principal avec un ou plusieurs composants supplémentaires lors de la circulation à travers le canal de mélange (4), le mélangeur statique (1) présentant des moyens d'alimentation (6, 7, 8) débouchant dans le canal de mélange (4), pour l'alimentation d'un ou de plusieurs courants de composant principal non mélangé ou d'un autre composant dans la région extérieure d'un courant de composant mélangé complètement ou partiellement mélangé sortant des moyens de mélange (3, 9) pour former une enveloppe complète ou partielle de composant principal non mélangé ou de l'autre composant autour du courant de composant mélangé, **caractérisé en ce que** les moyens d'alimentation (6, 7, 8) présentent un ou plusieurs canaux secondaires (6) disposés à l'intérieur du mélangeur statique (1) et débouchant par le biais d'une ou de plusieurs ouvertures d'alimentation (8) dans le canal de mélange (4) pour le transport du composant principal ou d'un autre composant et les ouvertures d'alimentation (8) sont disposées axialement, vu dans la direction d'écoulement, directement après le dernier moyen de mélange (3, 9).

2. Mélangeur statique (1) selon la revendication 1, **caractérisé en ce que** les canaux secondaires (6) s'étendent sur au moins une partie de l'étendue axiale du canal de mélange (4) essentiellement parallèlement à l'axe du canal de mélange.

3. Mélangeur statique (1) selon l'une quelconque des revendications 1 à 2, **caractérisé en ce que** chaque canal secondaire (6) débouche par le biais d'exactement une ouverture d'alimentation (8) dans le canal de mélange (4), et en particulier **en ce qu'**à chaque fois deux canaux secondaires (6) débouchent par le biais d'une ouverture d'alimentation commune (8) dans le canal de mélange (4) .

4. Mélangeur statique (1) selon l'une quelconque des revendications 1 à 3, **caractérisé en ce que** les ouvertures d'alimentation (8) sont une ou plusieurs ouvertures (8) dans la paroi du canal de mélange s'étendant en particulier radialement vers l'extérieur à travers le boîtier du canal de mélange (5), et en particulier **en ce que** ces ouvertures présentent une section transversale ronde circulaire, en forme de portion de cercle ou en forme de trou oblong.

5. Mélangeur statique (1) selon l'une quelconque des revendications 1 à 4, **caractérisé en ce que** les canaux secondaires (6) sont connectés au canal de mélange (4), par le biais d'une ou de plusieurs ouvertures de prélèvement (7) disposées dans la direction d'écoulement (S), vu en amont des ouvertures d'alimentation (8), et notamment vu dans la direction d'écoulement (S) avant les moyens de mélange (3, 9), pour prélever un ou plusieurs courant partiels de composant principal non mélangé du courant de composant principal et supplémentaire s'écoulant dans le canal de mélange (4).

6. Mélangeur statique (1) selon la revendication 5, **caractérisé en ce que** les canaux secondaires (6) sont formés au moins en partie par la paroi du canal de mélange et notamment **en ce que** la paroi interne du boîtier du canal de mélange (5) présente une ou plusieurs rainures axiales (6) ou cavités ou un renfoncement (24) s'étendant sur la circonférence de la paroi interne, lesquels, conjointement avec la limitation radiale extérieure d'un ou de plusieurs moyens de mélange (3, 9), forment un ou plusieurs canaux secondaires (6) pour dévier un ou plusieurs courants partiels de composant principal tout autour du ou des moyens de mélange (3, 9) radialement adjacents aux rainures (6) ou aux cavités ou au renfoncement (24), et en particulier **en ce que** le mélangeur statique comprend un moyen de mélange à plusieurs étages (3) et l'étendue axiale des rainures (6) ou des cavités ou du renfoncement (24) est telle qu'une déviation d'un ou de plusieurs courants partiels puisse s'effectuer exactement tout autour d'un étage de mélange du moyen de mélange à plusieurs étages (3, 9) et en particulier **en ce que** les rainures (6) ou les cavités ou le renfoncement (24) sont positionnés axialement de telle sorte qu'une déviation du courant partiel ou des courants partiels puisse s'effectuer exclusivement tout autour de l'avant-dernier étage de mélange du moyen de mélange (3), vu dans la direction d'écoulement (S).

7. Mélangeur statique (1) selon la revendication 5, **caractérisé en ce que** les ouvertures de prélèvement (7) sont une ou plusieurs ouvertures (7) dans la paroi du canal de mélange s'étendant en particulier radialement vers l'extérieur à travers le boîtier du canal de mélange (5), et en particulier **en ce que** ces ouvertures présentent une section transversale ronde circulaire, en forme de portion de cercle ou en forme de trou oblong.

8. Mélangeur statique (1) selon l'une quelconque des revendications 5 à 7, **caractérisé en ce que** la section transversale totale des ouvertures de prélèvement (7) pour chaque canal secondaire (6) est plus grande que la section transversale totale des ouvertures d'alimentation (8) pour chaque canal secondaire (6).

9. Mélangeur statique (1) selon l'une quelconque des revendications 1 à 8, **caractérisé en ce que** les moyens de mélange (3, 9) comprennent au moins deux pales de mélange (9) disposées axialement l'une derrière l'autre dans le canal de mélange (4) et radialement adjacentes à la paroi du canal de mélange, notamment des pales de mélange (9) réalisées sous forme de pales tourbillonnaires (9), et en particulier **en ce que** des pales de mélanges (9) disposées axialement les unes derrière les autres sont configurées de telle sorte qu'elles dévient les composants circulant à travers le canal de mélange (4) en alternance dans des directions opposées.

10. Mélangeur statique (1) selon la revendication 9, **caractérisé en ce que** les moyens d'alimentation (6, 7, 8) sont réalisés de telle sorte que le nombre des ouvertures d'alimentation (8) corresponde au nombre ou à un multiple entier du nombre des pales de mélange (9), qui sont disposées axialement vu dans la direction d'écoulement en dernier dans une position axiale commune dans le canal de mélange (4) et en particulier **en ce que** deux pales de mélange (9) sont disposées en dernier dans une position axiale commune et les moyens d'alimentation (6, 7, 8) présentent quatre ouvertures d'alimentation (8) réparties uniformément sur la circonférence de la paroi du canal de mélange.

11. Mélangeur statique (1) selon l'une quelconque des revendications 1 à 10, **caractérisé en ce que** le mélangeur statique (1) présente un insert de mélangeur en une ou plusieurs parties comprenant le boîtier de canal de mélange (5) et les moyens de mélange (3, 9), et une partie de boîtier (2) réalisée séparément de l'insert de mélangeur, entourant en soi l'insert de mélangeur avec une ouverture.

12. Mélangeur statique (1) selon la revendication 11, **caractérisé en ce que** l'insert de mélangeur présente, dans sa région extérieure, un contour extérieur s'écartant du contour de la paroi interne de l'ouverture de la paroi du boîtier (2) l'entourant, pour former un ou plusieurs canaux secondaires (6) conjointement avec la paroi interne de cette ouverture.

13. Mélangeur statique (1) selon la revendication 12, **caractérisé en ce que** l'insert de mélangeur présente dans sa région extérieure une ou plusieurs rainures s'étendant axialement (6), notamment de section transversale rectangulaire, qui constituent conjointement avec une partie de la paroi interne de l'ouverture de la partie du boîtier (2) les entourant, un ou plusieurs canaux secondaires (6).

14. Mélangeur statique (1) selon l'une quelconque des revendications 12 à 13, **caractérisé en ce que** le contour extérieur de l'insert de mélangeur et le contour de l'ouverture de la partie de boîtier (2) qui l'entoure sont configurés de telle sorte qu'ils forment ensemble un ou plusieurs canaux secondaires (6) de section transversale annulaire circulaire ou en forme de segment annulaire circulaire.

15. Mélangeur statique (1) selon l'une quelconque des revendications 12 à 14, **caractérisé en ce que** le contour extérieur de l'insert de mélangeur et le contour de l'ouverture de la partie du boîtier (2) qui l'entoure sont configurés de telle sorte qu'ils forment ensemble un ou plusieurs canaux secondaires (6) de section transversale en forme de portion de cercle.

16. Mélangeur statique (1) selon l'une quelconque des revendications 11 à 15, **caractérisé en ce que** l'ouverture dans la partie de boîtier (2), qui entoure l'insert de mélangeur, est cylindrique et en particulier **en ce que** la partie de boîtier (2) est réalisée au moins dans des régions partielles sous la forme d'un cylindre annulaire circulaire.

17. Mélangeur statique (1) selon l'une quelconque des revendications 1 à 16, **caractérisé en ce qu'**il présente des moyens de raccordement (18, 19, 22, 23), en particulier des éléments de vissage (18, 19, 22) pour le raccordement à des alimentations pour composant principal, composant supplémentaire et/ou un autre composant, et en particulier **en ce que** le mélangeur statique (1) présente des moyens de raccordement (19), en particulier des éléments de vissage (19), pour une buse de décharge (12) ou un organe de transfert.

18. Mélangeur statique (1) selon l'une quelconque des revendications 1 à 17, **caractérisé en ce que** le mélangeur (1) présente une buse de décharge (12) et en particulier **en ce que** la buse de décharge (12) présente dans sa paroi, au niveau de sa pointe, une portion (13) notamment triangulaire, s'avançant à l'encontre du sens d'écoulement (S), pour décharger un cordon de composant, notamment de section transversale essentiellement triangulaire, dans le cas d'un déplacement horizontal de la buse de décharge (12) orientée perpendiculairement à une surface d'application, dans le sens horizontal et opposé à la portion (13) pendant l'application.

19. Mélangeur statique (1) selon la revendication 9 et selon la revendication 18, **caractérisé en ce que** les moyens de mélange (3, 9) sont configurés de telle sorte que les pales de mélange (9) disposées axialement en dernier vu dans le sens de l'écoulement (S) soient réalisées sous forme d'une paire de pales de mélange disposée dans une position commune axiale dans le canal de mélange (4), et dont les arêtes de fuite (14), considérées dans le sens de l'écoulement (S), forment essentiellement une ligne (Z) passant par le centre du canal de mélange (4), et **en ce que** le moyen de mélange (3, 9) et la buse de décharge (12) sont orientés l'un par rapport à l'autre de telle sorte que la ligne (Z) formée par les arêtes de fuite (14) de la paire de pales de mélange forme un angle (α) dans la plage de 20° à 60°, notamment dans la plage de 30° à 50° et plus particulièrement dans la plage de 35° à 45° avec une ligne radiale (R) passant par le centre de la portion (13) dans la buse (12), et en particulier en ce que cet angle (α) s'étend depuis la ligne radiale (R) à l'encontre de la direction de tourbillonnement (D) de la paire de pales de mélange.

20. Mélangeur statique (1) selon l'une quelconque des revendications 1 à 19, **caractérisé en ce que** les moyens de mélange (3, 9) et/ou le boîtier de canal de mélange (4, 5) sont complètement ou en partie en plastique.

21. Procédé de création d'un courant de composant mélangé au moyen d'un mélangeur statique (1) selon l'une quelconque des revendications précédentes, constitué d'un composant principal mélangé complètement ou partiellement avec un ou plusieurs composants supplémentaires, qui est enveloppé partiellement ou complètement par un composant principal non mélangé ou un autre composant, le procédé présentant les étapes suivantes :
a) mélange d'un courant de composant principal et d'un ou plusieurs courants d'un ou plusieurs composants supplémentaires réactifs ou non réactifs avec un élément de mélange statique (3) disposé dans un canal de mélange (4) pour fournir un courant de composant mélangé complètement ou partiellement mélangé ;
b) alimentation d'un ou de plusieurs courants de composant principal non mélangé ou d'un autre composant dans le canal de mélange (4) dans la région extérieure du courant de composant mélangé complètement ou partiellement mélangé pour former une enveloppe complète ou partielle de composant principal non mélangé ou de l'autre composant tout autour du courant de composant mélangé,
**caractérisé en ce que**
le ou les courants acheminés en vue d'un enveloppement complet ou partiel, constitués de composant principal non mélangé ou d'un autre composant sont acheminés à la région extérieure du courant de composant mélangé complètement ou partiellement mélangé axialement vu dans le sens de l'écoulement directement après l'élément de mélange statique (3).

22. Procédé selon la revendication 21, **caractérisé en ce que** le ou les courants acheminés en vue d'un enveloppement complet ou partiel sont constitués de composant principal non mélangé et sont prélevés du courant de composant principal et supplémentaire s'écoulant dans le canal de mélange (4) .

23. Procédé selon l'une quelconque des revendications 21 ou 22, **caractérisé en ce que** les courants acheminés pour l'enveloppement, constitués de composant principal non mélangé sont prélevés dans la région d'entrée de l'élément de mélange statique (3, 9) du courant s'écoulant dans celui-ci de composant principal et supplémentaire et sont acheminés dans la région de sortie de l'élément de mélange (3, 9) au courant de composant mélangé.

24. Procédé selon l'une quelconque des revendications 21 à 23, **caractérisé en ce que** l'on utilise un élément de mélange statique à plusieurs étages (3, 9), et les courants acheminés pour l'enveloppement, constitués de composant principal non mélangé, sont prélevés dans la région entre les étages de l'élément de mélange, notamment dans la région avant l'avant-dernier étage et le dernier étage de l'élément de mélange, vu dans le sens de l'écoulement, du courant de composant principal et supplémentaire circulant au travers, et sont acheminés au courant de composant mélangé après cet étage de l'élément de mélange ou ces étages de l'élément de mélange.

25. Procédé selon l'une quelconque des revendications 21 à 24, **caractérisé en ce que** l'on utilise un élément de mélange statique (3, 9) avec des pales de mélange (9), et en particulier **en ce qu'**un mélange par couches du composant supplémentaire dans le composant principal a lieu.

26. Procédé selon l'une quelconque des revendications 21 à 25, **caractérisé en ce que** le composant principal est un adhésif monocomposant de grande viscosité et le composant supplémentaire est un catalyseur de durcissement et en particulier **en ce que** l'adhésif monocomposant est du PU.

27. Application du procédé selon l'une quelconque des revendications 21 à 26 pour la production d'un cordon d'adhésif avec un coeur en PU avec un catalyseur de durcissement mélangé en couches et une enveloppe en PU non mélangé pour le collage de composants les uns aux autres.

28. Utilisation du mélangeur statique (1) selon l'une quelconque des revendications 1 à 20 pour le traitement d'adhésifs monocomposants de haute viscosité avec des catalyseurs de durcissement, notamment pour le traitement de PU de haute viscosité avec des pâtes de catalyseur de durcissement.
